Europäisches Patentamt

(19) European Patent Office

Office européen des brevets

(11) Publication number: **0 012 252**
**B1**

## (12) EUROPEAN PATENT SPECIFICATION

(45) Date of publication of patent specification: **15.06.83**

(21) Application number: **79104655.0**

(22) Date of filing: **23.11.79**

(51) Int. Cl.³: **F 02 C 7/04, B 01 D 45/12, F 02 M 35/02**

(54) Inlet air cleaner and mist eliminator assembly for gas turbine engines.

(30) Priority: **04.12.78 US 965815**

(43) Date of publication of application:
**25.06.80 Bulletin 80/13**

(45) Publication of the grant of the patent:
**15.06.83 Bulletin 83/24**

(84) Designated Contracting States:
**BE DE FR GB IT NL SE**

(56) References cited:
**DE - A - 2 051 181**
**DE - A - 2 753 988**
**US - A - 3 520 114**
**US - A - 3 611 679**
**US - A - 3 614 862**
**US - A - 3 707 068**
**US - A - 3 902 876**
**US - A - 3 915 679**
**US - A - 3 925 045**
**US - A - 4 025 320**
**US - A - 4 050 913**

(73) Proprietor: **PALL CORPORATION**
**Glen Cove New York 11542 (US)**

(72) Inventor: **Roach, Charles J.**
**158 Lefferts Place**
**Brooklyn, New York 11238 (US)**

(74) Representative: **Gudel, Diether, Dr. et al,**
**Grosse Eschenheimer Strasse 39**
**D-6000 Frankfurt/Main (DE)**

Courier Press, Leamington Spa, England.

Inlet air cleaner and mist eliminator assembly for gas turbine engines

The invention is concerned with a vortex air cleaner and mist eliminator assembly for quantitatively removing air-borne water and other air-borne liquid and solid contaminants ingested by a gas turbine engine in marine use comprising, in combination, a housing having an inlet and an outlet arranged for flow therethrough of air carrying heavier and lighter contaminant particles and aerosol-borne particles; and disposed in the housing across the line of air flow from the inlet to the outlet, in sequence, a first array removing heavier liquid and solid contaminant particles and comprising a plurality of vortex air cleaners, in which the vortex air cleaners each comprises a straight tubular air cleaner body having a cylindrical central passage with an inlet and an outlet at opposite ends, and a deflector adjacent the inlet for creating a vortex stream in the influent air to concentrate contaminant particles in the air at the periphery of the passage and provide a core of air at the center of the passage containing lighter and aerosol-borne contaminant particles, and an outlet member having a central core air passage communicating with the cylindrical central passage of the tubular body and disposed within the passage at the outlet, the exterior wall of the outlet member defining a generally annular contaminant scavenge passage within the cylindrical central passage of the tubular body through which pass contaminant particles, while core air at the center of the passage passes through the central core air passage of the outlet member; a second array coalescing and removing lighter and aerosol-borne liquid and solid contaminant particles and comprising a plurality of superimposed sheets of a filamentary material defining passages therethrough from face to face of the array, arranged in flow communication with the core air passages of the outlet member of the vortex air cleaners in the first array, the sheets comprising monofilaments having a diameter within the range from about 12.7 to about 889 micrometers, and being compressed substantially throughout this surface area to a maximum core diameter, below about 5 mm under a pressure within the range from about 6.9 to about 690 KPa, such that the pressure drops across a 0.15 square meter portion of the array at a standard air flow of 83 m³/min. at 25°C within the range from about 0.13 to about 0.75 KPa water column, the filaments at the interface of the interior layers in pressure contact with each other substantially throughout by such compression.

Such an assembly especially for use in agricultural aircrafts is shown in DE—A1—2,753,988. Although this assembly satisfyingly is removing liquid and solid contaminants ingested by the engine in environments as met in agricultural or similar uses of the aircraft, the assembly will not work well in marine use. This is because the operation of gas turbine engines on marine vehicles on or near water results in ingestion of considerable quantities of water, arising from propeller spray, hull spray, wind-blown spray, waves, and even the exhausts of the engine. Wind and vehicle-generated air currents envelop the vehicle in its own cloud of water droplets or spray, and large quantities of water can at the same time be sucked up from below a low-hovering vehicle, particularly during landing, loading and lift-off, and during heavy seas.

Operation of such engines or vehicles on land results in ingestion of considerable quantities of sand and other particulate matter. Large quantities of sand and other particulate matter can be sucked up from a low-hovering vehicle, or by a vehicle operating over dry or desert terrain.

The result is that the gas turbine engine consumes large quantities of water, as well as solid particles which can greatly increase engine wear, and cause controls malfunction due to contamination and corrosion. Compressed air from the engine is sometimes used to drive auxiliary equipment and to condition the cockpit environment. Both are adversely affected by contaminated air.

The problem is complicated by the fact that not only must the water and solid particles be efficiently removed from the air entering the engine intake, but they must be removed with the least amount of power loss to the engine. Inlet restrictions to a gas turbine engine cause power loss, and if engine power is reduced sufficiently due to the operation of an air cleaner, the load will have to be reduced in order to allow the vehicle to become air-borne, or the engine output power demand reduced.

Conventional barrier filters are not satisfactory for cleaning the air at the engine air inlet, because they introduce too high an inlet restriction, so that a reasonable volume of filter is not capable of passing a sufficient volume of air per unit time at equivalent power loss without frequent barrier servicing. The inlet restriction increases as the filter becomes salt crystal-encrusted and dirt-loaded, and increases markedly if the filter becomes wet.

Presently in use on marine vehicles are filamentary woven or nonwoven demisters two to four feet deep in the flow direction. These are capable when installed across turbine engine air inlets on marine vehicles of separating aerosols, mists, large droplets and dust particles with high efficiencies, but they are unable to remove water content in the inlet air above approximately 1000 ppm at a duct face velocity of approximately 3.1 meters per second. At such large amounts of water, coalesced droplets combine to produce droplets large enough to be acted on by the aerodynamic drag of the exiting air velocity, and blow off the surface (breakthrough), whereupon they pass downstream of the demister. As dust particles and salt crystals are collected on the demister, the pressure drop increases, which requires frequent servicing to reduce the pressure drop (inlet restriction). Another disadvantage is that because velocities must be kept low, an extremely large volume is required to produce high separating efficiencies without droplet breakthrough.

US—A—3,707,068 is teaching to use for separating liquids from gases, especially oil from air, a series of separators, namely in flow direction a first centrifugal separator followed by an agglomerator cartridge followed by a second centrifugal separator. This second centrifugal separator itself consists of a flow path threefold reversed by about 180°. Behind the first reversion, vanes are provided for creating a vortex fluid stream. This device, however, has the disadvantage of causing a rather great pressure drop, especially by the flow path reversals in all stages of this separator.

It is, therefore, an object of the invention, to provide a vortex air cleaner and mist eliminator assembly as outlined above which efficiently and quantitatively is removing air-borne water and other air-borne liquid and solid contaminants ingested by a gas turbine engine in marine use keeping any pressure drop in the inlet air at a minimum.

The invention, for achieving this object, is characterized by a third array being provided for removing additional liquid and solid contaminant particles including coalesced liquid droplets and comprising a plurality of vortex air cleaners arranged at the same or at a higher density of inlet open surface area than the first array, in which the vortex air cleaners comprise a straight tubular with an inlet and an outlet at opposite ends, and a deflector adjacent the inlet for creating a vortex stream in the influent air to concentrate contaminant particles in the air at the periphery of the passage, and provide a core of air at the center of the passage, and an outlet member having a central core air passage communicating with the cylindrical central passage of the tubular body and disposed within the passage at the outlet, the exterior wall of the outlet member defining a generally annular contaminant scavenge passage within the cylindrical central passage of the tubular body through which pass contaminant particles, while core air at the center of the passage passes through the central core air passage of the outlet member such that the inlet gas to the cleaner arrays passes along a substantial straight path towards the engine thereby keeping any pressure drop in the inlet air at a minimum.

Surprisingly, it was found, that these features efficiently and quantitatively are removing air-borne water and other air-borne liquid and solid contaminants ingested by the gas turbine engine, although one had to expect at the outlet of the second array contaminants of a size in aerosol particle dimensions only. Such contaminants, although having passed through the first array, efficiently are removed by said third array, essentially being identical to the first array. All this is done keeping the pressure drop at a minimum.

The subclaims are directed upon preferred embodiments of the assembly of the invention.

The combination of three such arrays constituting the inlet air cleaner and mist eliminator assembly of the invention has for instance a length in the flow direction within the range from about 0,2 to 0,3 meter, and separates aerosols, mists, large droplets and dust particles with high separation efficiency. In addition, the apparatus is virtually insensitive to a water content in the inlet air well above 13,000 ppm at a duct face velocity of approximately 3,1 meters per second, so that coalesced droplets do not combine under such conditions to produce droplets large enough to be acted on by the aerodynamic drag of the exiting air velocity and blow off of the surface (droplet breakthrough).

In those applications where a wave may engulf the face of the first array, a louvred plate may be placed approximately 2,5 cm in front of the array, to shed all or part of the water.

Since the first and third arrays can be made self-cleaning, by scavenging the separated dust and water overboard, servicing is confined to the second array (the mist eliminator), and its service life is extended because of its being preceded by the first array, so that servicing frequency is markedly reduced.

In place of knitted wire mesh sheets in the mist eliminator, there can be substituted in whole or in part woven wire mesh sheets and/or nonwoven wire filament sheets, formed of filament within the same diameter range, and compressed under a pressure to produce the same fiber density.

In one embodiment, the passage has an inside diameter of less than about 2,5 cm and the vanes of the deflector extend along the central passage for a length within the range from about 50% to about 60% of the total length of the passage.

In another embodiment, the pitch length in inches of the vanes of the deflector and the inside diameter in inches of the central passage of the tubular body have the relationship that is expressed according to the equation $Pl=Kd^{.68}$, in which K is within the range from about 2,2 to about 3,2.

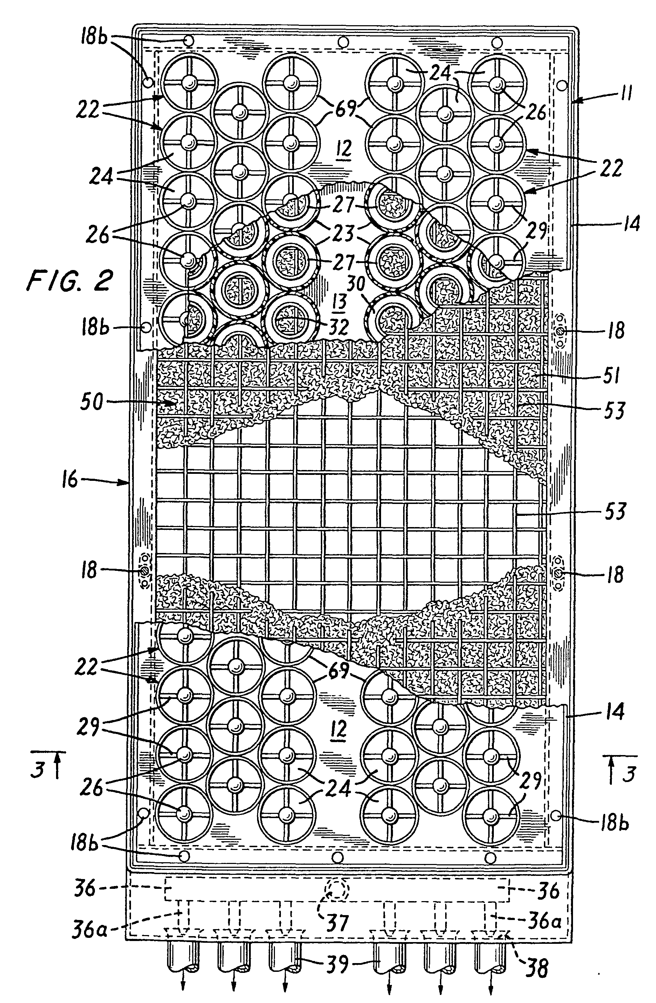

In a vortex air cleaner array, usually the individual air cleaners are spaced together as closely as possible. This means, as shown in Fig. 2, that the individual air cleaners are arranged in parallel rows, with the individual cleaners of each row being slightly and uniformly offset from the cleaners of the next row. In this way, the rows can be placed slightly closer together than the outside diameter of the adjacent individual air cleaners would otherwise allow.

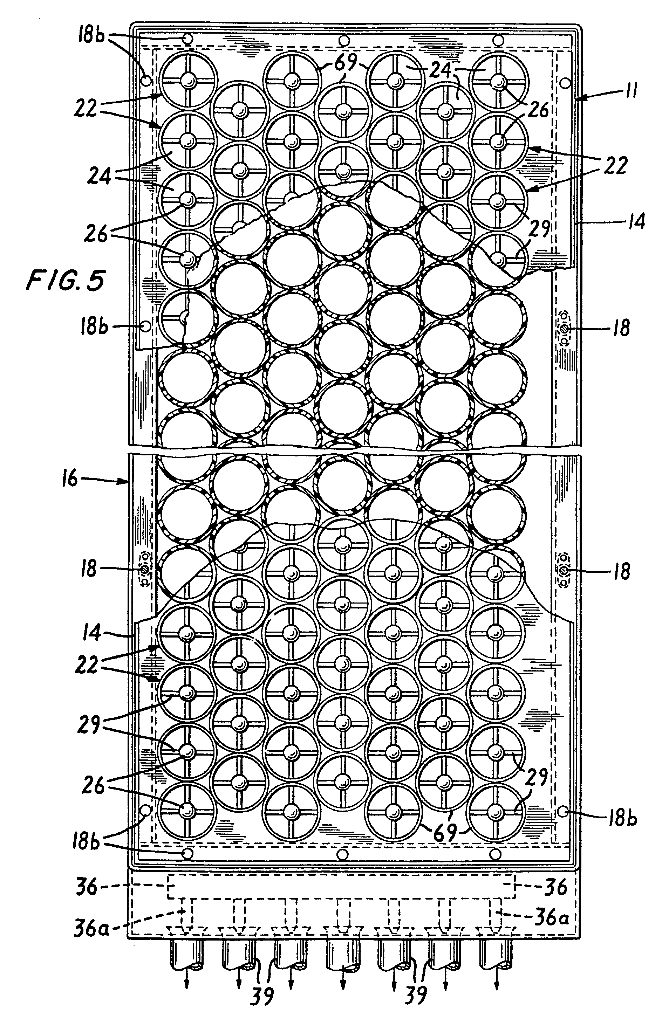

In the first array, space between rows of air cleaners can be left for scavenge flow, as shown in Figure 2. To achieve the higher density and inlet open surface area for higher flow-through capacity in the second array, such space, since it is not needed, can be taken up by another row or two of vortex air cleaners as shown in Figure 5.

The sheets of filamentary material have filaments or wires whose diameter is within the range from about 12.7 to about 889 micrometers, and an open volume within the range from about 80 to about 99.9%, preferably from about 95 to about 99.9%, and are arranged in an array of a plurality of layers under a compression within the range from about 6,9 to about 60 KPa, the array having a thickness or depth within the range from about 1.3 to about 25.4 cm.

A preferred embodiment of the inlet air cleaner and mist eliminator assembly in accordance with the invention is shown in the drawings, in which

Figure 1 represents a longitudinal section through a gas turbine engine, showing the location of the inlet air cleaner and mist eliminator assembly in accordance with the invention, at the engine air inlet, before the compressor;

Figure 2 is a plan view with parts cut away showing the gas inlet face of the first vortex air cleaner array of Figure 1, taken along the line 2—2 of Figure 1;

Figure 3 is a longitudinal sectional view through the vortex air cleaner array of Figure 2, showing individual air cleaners, and also showing the knitted wire mesh mist eliminator downstream of the vortex air cleaner array;

Figure 4 is a plan view with parts cut away taken along the line 4—4 of Figure 1, showing the gas inlet face of the knitted wire mesh array of Figure 1;

Figure 5 is a plan view with parts cut away showing the gas inlet face of the second vortex air cleaner array of Figure 1, taken along the line 5—5 of Figure 1; and

Figure 6 is a view from above and in front of an air cushion or Hovercraft type of marine vehicle including a vortex air cleaner and mist eliminator assembly of Figures 1 to 5.

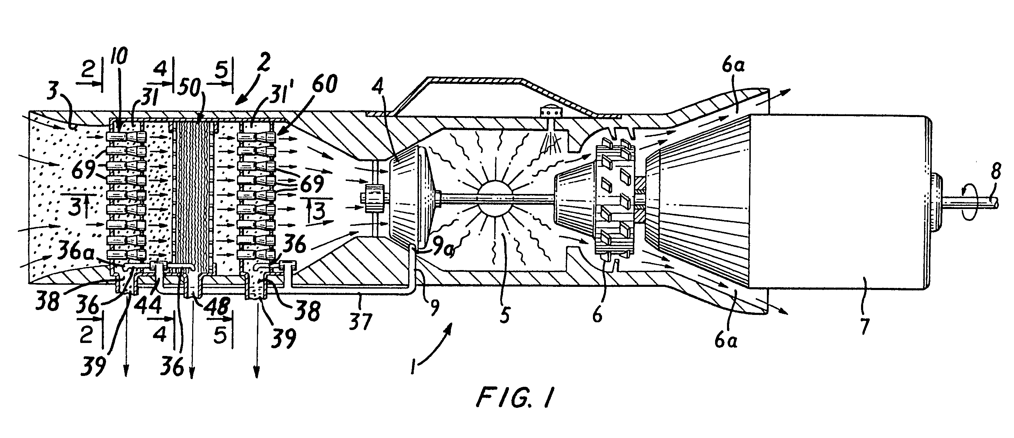

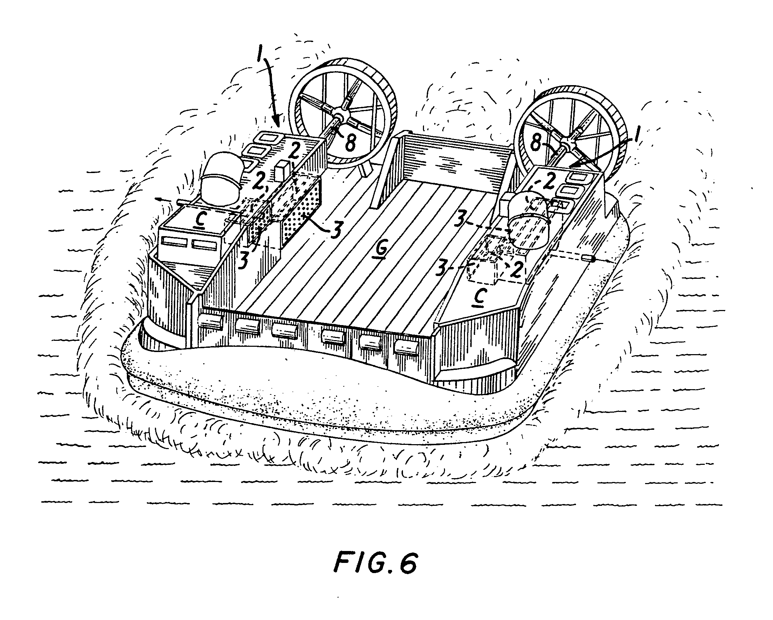

The turbine engine 1 shown in Figure 1 is of conventional construction for a marine vehicle such as that of Figure 6, except for the air cleaner assembly 2 of the invention. The engine includes, in flow sequence, an air inlet or intake 3, a compressor 4, a burner 5, a turbine 6, and optionally a gear box 7 or other output drive shaft speed reducing means operating the optional output drive shaft 8. A pure jet aircraft engine would not include a gear box or other propulsion drive reducing means, but a marine vehicle engine could do so. An engine exhaust line 6a vents the products of combustion to atmosphere, after passing through the turbine 6. A bleed air outlet 9 on the compressor 4 supplies compressed air for the engine control, cockpit air control, and auxiliary power systems.

The air inlet 3 upstream of the compressor is of a sufficiently large size to channel the large volumes of air required by the engine. Disposed across the line of flow of air from the air inlet 3 to the compressor 4 is an air cleaner and mist eliminator assembly 2 in accordance with the invention.

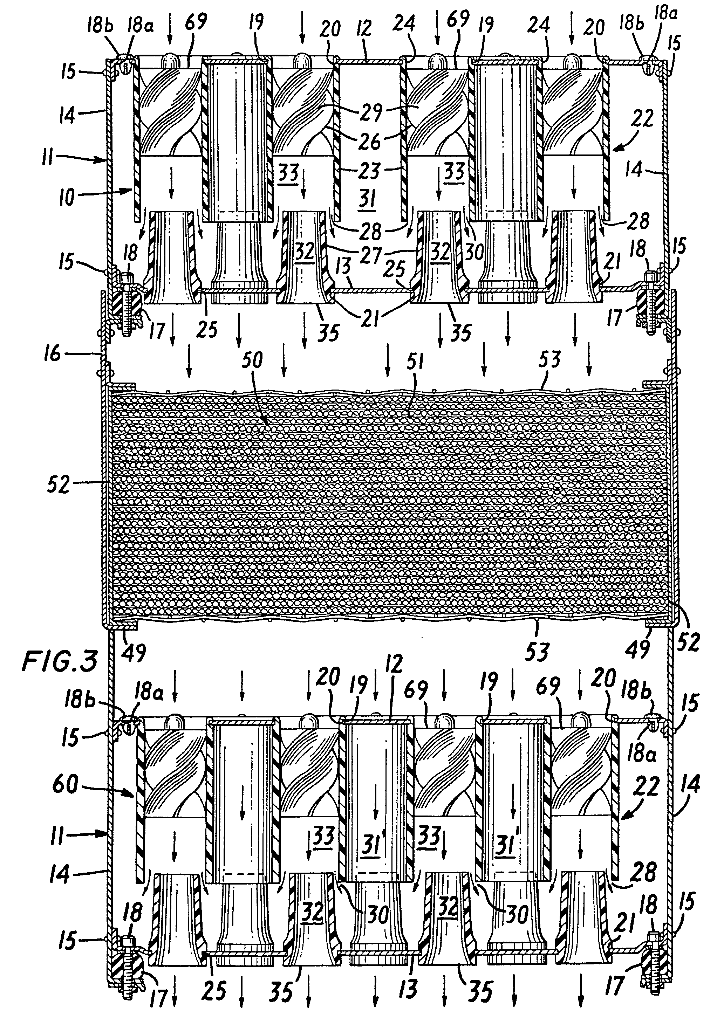

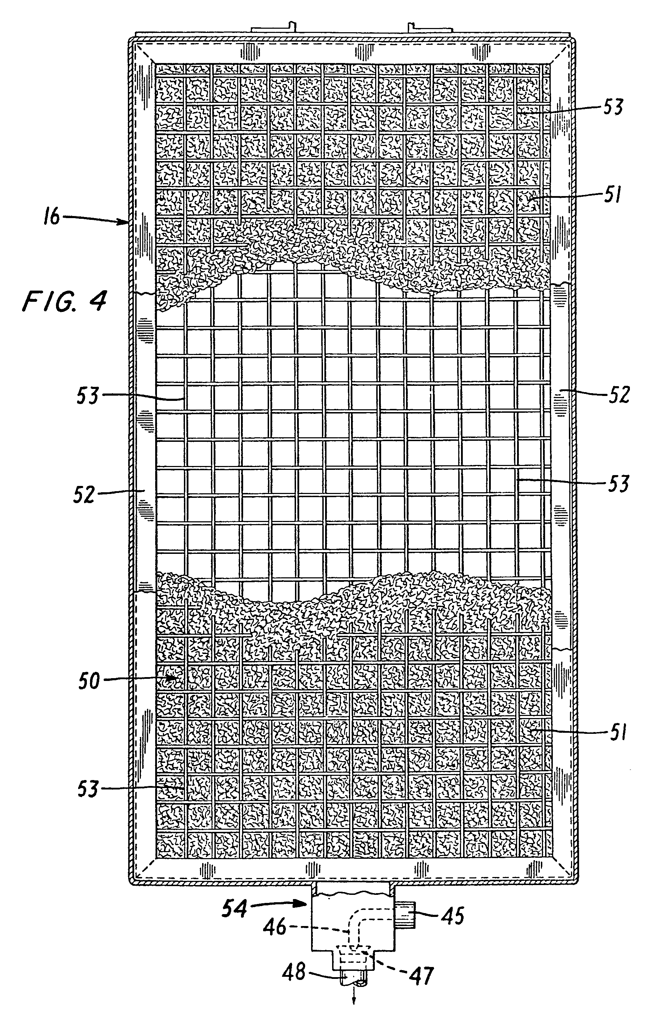

The air cleaner and mist eliminator assembly of the invention, as is best seen in Figures 2 to 5, comprises a first array 10 of vortex air cleaners, and a second array of sheets of filamentary material constituting a mist eliminator 50, and a third array 60 of vortex air cleaners.

The vortex air cleaner arrays 10 and 60 are conventional and of very similar construction, differing only in the number of vortex air cleaners 69 per unit of flow-through surface area. Each comprises a plurality of vortex air cleaners 69 arranged in rows, and nested closely together, supported in an air cleaner assembly housing 11 that also includes the mist eliminator 50 in between the two arrays and comprising a vortex generator plate 12 and an outlet tube plate 13 closing off the open end of an enclosing shell 14. The vortex generator and outlet tube plates 12 and 13 are turned 90° at their periphery, and are held to the shell 14 by rivets 15. The vortex generator plates are shock-mounted to the air cleaner housing 16 through rubber air seals 17 and bolts 18, access to which is provided by apertures 18a and removable plugs 18b in plates 12.

The vortex generator and outlet tube plates 12, 13 are formed with a plurality of apertures 20 and 21. The apertures 20 accommodate and support the vortex generator tubes 22. Each vortex generator tube 22 comprises a tubular housing 23 having a central passage 33, an inlet 24 and an outlet 28. A vortex generator 26 is disposed within the central passage 33 adjacent the inlet 24. The housing 23 is made of metal or glass fiber-filled polypropylene.

The vortex generators 26 are made of glass fiber-filled polypropylene with channel black added for ultraviolet resistance, and are snapped into position and the inlets flared to minimize the inlet pressure loss. The vanes 29 are helical.

The apertures 21 accommodate and support the generally tapered tubular outlet tubes 27, disposed with one end extending into the outlet 28 of the passage 33. The outlet tubes have a tapered central open passage 32 therethrough for the removal of a central core of air of passage 33. The outlet tubes define an annular space 30 between the vortex generator housing 23 and the outer periphery of the outlet tube 27, for receiving the peripheral annulus of air in passage 33, for the removal of dirt particles.

The apertures 20 on the vortex generator plate 12 engage in a circumferential groove 19 about the inlet 24 of each vortex generator tube 22. The apertures 21 in the outlet tube plate 13 each engage a circumferential groove 25 on each outlet tube 27. The space 31 between the plates 12 and 13 (which defines the interior of the air cleaner housing 11) communicates with the annular passage 30 of each vortex generator (26) and constitutes a scavenge chamber. A duct 37 (see Figures 1 and 2) communicates the scavenge chamber 31 to the bleed air line 9a from the compressor 4 of the engine. The core air passes through the central passage 32 of the outlet tubes 27 without entering the contaminant scavenge chamber 31.

Comparison of Figures 2 and 5 show that although the housing volumes are the same, there are two more rows of vortex air cleaners 69 in the third array 60 than in the first array 10, and the scavenge chamber is reduced in open volume to that extent. This reduces the pressure drop in the third array, since the larger scavenge volume of the first array is not needed, most of the contaminants having already been removed.

Under ideal conditions, the average pressure drop through each tube in the first and third arrays 10, 60 at 63,8 m³/min is approximately 0,5 KPa water column from the inlet 24 of each vortex generator tube 22 to the core air outlet 35 of the outlet tube 27.

The first vortex air cleaner array 10 removes large solid particles and also large liquid drops, as well as liquid and solid particles considerably heavier than air, regardless of size. This material is collected in the scavenge chamber 31, and is dumped overboard. For this purpose, an ejector system is provided using air under pressure from the bleed air line 9 of the compressor, which is tapped by line 37, feeding the air under pressure directly to the ejector manifold 36, whose nozzles 36a open into the ejector throats 38. Air at high velocity ejected from the nozzles 36a into the throats 38 draws air and with it liquid and solid contaminants from the scavenge chamber 31, and dumps the material overbord at outlet ports 39. In this case, each half-side of the scavenge chamber 31 has as the ejector system an array of three ejector tubes in two groups, a total of six, but any arrangement and number of ejector tubes can of course be used, according to the size of the chamber and the amount of air designed to be dumped overboard. A larger number of size or both may be required if the engine air flow is higher, and conversely if the engine air flow is lower.

The air stream from the first vortex air cleaner array 10 has most of the large and heavier solid and liquid contaminants removed, but finely divided solid particles too light in weight or too well dispersed in the air to be separated remain entrained, as well as liquid droplets so finely divided as to constitute stable aerosols or mists. Such material is virtually quantitatively removed or coalesced into large droplets in the mist eliminator 50.

The mist eliminator comprises an array of seventeen oil-coated knitted wire mesh sheets 51 having an open volume of 98.7% and confined under a compression of about 6,9 KPa within a frame 52 between rigid mesh 53, 2,5×2,5×0.16 cm thick of stainless steel wire filaments. In this case the knitted wire mesh sheets are made of seventeen sheets of 152 micrometers diameter stainless steel wires. The wires of the combined sheets in the array occupy only 1.3% of the volume of the mist eliminator; the remainder of the volume 98,7%, is open. The thickness of the knitted wire mesh array is 5 cm.

Finely divided solid material of micron dimensions passing through the first vortex air cleaner array 10 tends to lodge in the convoluted interstices of the knitted mesh stack, and collects there. The oil (or other nonvolatile liquid) coating markedly increases the effectiveness of solids removal from the air stream, retaining the solids upon impingement thereon, but it can be omitted if desired. Most of the liquid that is removed by impingement on the oil coating the wires of the mesh tends to flow by gravity downwardly, and collects at the bottom of the array, washing off and carrying along some of the solid material as it does so. For removal of this liquid and suspended solid material, an ejector 54 is provided in the bottom of the housing 52. This ejector is of a design similar to those of the vortex air cleaner arrays. The line 44 feeds air under pressure from bleed line 9 to the ejector tube 45, terminating in a nozzle 46 in the ejector throat 47. The liquid and whatever solid material is suspended therein is drawn into the throat 47 and dumped overboard at the outlet port 48. This ensures that the liquid material is removed, and the open volume of the array maintained, and it also takes advantage of the wash filter action of the liquid as it percolates down the mesh stack towards the ejector.

The mist eliminator may become overburdened by solids under certain conditions, and consequently provision is made to slide out the mist eliminator from the air cleaner and mist eliminator assembly housing on guides 49, to facilitate cleaning and/or replacement whenever required. The mist eliminator array can be discarded when it is sufficiently laden with contaminant material that cannot be removed as to impose a serious pressure drop and/or air flow restriction on the inlet air to the engine, since this of course will cause loss of power and increase operating costs. Reverse flow cleaning with detergent wash, steam cleaning or appropriate liquids is effective, and can be used. A cleaned mist eliminator is readily reinstalled simply by sliding it into the housing, in the manner shown.

Any liquid and solid material remaining in the air stream, such as coalesced liquid droplets

**0 012 252**

snatched from the mist eliminator wires, is removed in the third vortex air cleaner array 60. Such removal is ensured by the higher flow-through surface area of vortex air cleaners 69 in this array. As in the first array 10, this material is collected in the scavenge chamber 31', and is dumped overboard. For this purpose, a similar ejector system is provided, using air under pressure from the bleed air line 9 of the compressor, which is also tapped by line 37, feeding the air under pressure directly to the ejector manifold 36, whose nozzles 36a open into the ejector throats 38. Air at high velocity ejected from the nozzles 36a into the throats 38 draws air and with it any residual liquid and solid contaminants from the scavenge chamber 31', and dumps the material overboard at outlet ports 39. In this case, each half-side of the scavenge chamber 31' has as the ejector system an array of three ejector tubes in two groups, a total of six, but any arrangement and number of ejector tubes can of course be used, according to the size of the chamber and the amount of air designed to be dumped overboard. A larger number or size or both may be required if the engine air flow is higher, and conversely if the engine air flow is lower.

The air stream from the third vortex air cleaner array 60 has all of the liquid and solid contaminants removed, not only the large and heavier but also the finely divided solid and liquid particles that are light in weight and were originally well dispersed in the inlet air. Such material has been virtually quantitatively removed after passage through the vortex air cleaner array 60.

Figure 6 shows the location of the gas turbine engine and air cleaner assembly of Figures 1 to 5 on a typical air cushion vehicle or Hovercraft. On one side of the cabins C facing the gangway G in series flow to the engine 1 are the engine air intakes 3 and the air cleaner assembly 2 of the invention.

Typical results showing the advantages of the apparatus of the invention in the removal of both solid and liquid contaminants, e.g., dirt and water, are shown by the following comparative data.

The apparatus used in obtaining this data was as shown in Figures 1 to 5, with the difference that the mist eliminator comprises an array of 34 oil-coated knitted wire mesh sheets having an open volume of 98.7% and confined under a compression of about 6,9 KPa between grids of rigid stainless steel wire mesh 2,5×2,5×0,16 cm. The knitted wire mesh sheets were made of stainless steel wire 152 micrometers in diameter. The wires of the combined sheets in the array occupied 1.3% of the volume. The remainder of the volume, 98.7%, was open. The thickness of the array was 10 cm.

The system was used to clean AC coarse dust and salt water from air entering the apparatus at a face velocity in feet per second (meters per second), and an air flow rate in standard cubic feet per minute (standard cubic meters per minute), with a scavenge air flow, and a pressure drop in inches of water (Kilo Pascals) as shown in Table I.

The efficiency in the separation of the AC coarse dust is given in percent. The efficiency for the salt water separation at various parts of water per million parts of air is given in percent.

The data is put in parallel with a like series of experiments carried out using apparatus with the same first and second stage arrays, but without the third stage array of vortex air cleaners.

TABLE I

| Face velocity | Air flow | Scavenge air flow | Pressure drop H₂O | A. C. coarse dust separating efficiency | Theoretical separating efficiency-% (Salt water to air concentrations) Parts/Million[1] | | | | | Droplet water breakthrough[2] |
|---|---|---|---|---|---|---|---|---|---|---|
| (m/sec) | (m³/min) | % | (KPa) | % | 0.1 | 1 | 10 | 100 | 1000 | Parts/Million |
| 3 | 76 | 5.8 | 0.25 | 98+ | 91.0 | 92.0 | 96.0 | 97.0 | 97.0 | >13000 |
| 6 | 153 | 5.8 | 0.97 | 98+ | 97.0 | 97.3 | 98.1 | 99.0 | 99.8 | >5000 |
| 9 | 229 | 5.8 | 2.2 | 98+ | 99.7 | 99.7 | 99.9 | 99.9 | 99.8 | >2000 |
| 12 | 306 | 5.8 | 3.9 | 98+ | 99.9 | 99.9 | 99.9 | 99.8 | 99.7 | >1100 |

Apparatus of the invention.

TABLE I (continued)

| Face velocity | Air flow | Scavenge air flow | Pressure drop H₂O | A.C. coarse, dust separating efficiency | Theoretical separating efficiency-% (Salt water to air concentrations) Parts/Million[1] | | | | | Water droplet breakthrough[2] |
|---|---|---|---|---|---|---|---|---|---|---|
| (m/sec) | (m³/min) | % | (KPa) | %) | 0.1 | 1 | 10 | 100 | 1000 | Parts/Million |
| 3 | 76 | 4.7 | 0.22 | 98+ | 91.0 | 92.0 | 96.0 | 97.0 | 97.0 | >12000 |
| 6 | 153 | 4.7 | 0.60 | 98+ | 97.0 | 97.3 | 98.1 | 99.0 | 99.8 | >4000 |
| 9 | 229 | 4.7 | 1.8 | 98+ | 99.7 | 99.7 | 99.9 | 99.9 | 99.8 | >1500 |
| 12 | 306 | 4.7 | 2.9 | 98+ | 99.9 | 99.9 | 99.9 | 99.8 | 99.7 | >500 |

Apparatus with two stages only, the last vortex air cleaner array omitted.

[1]Particle size distribution at various salt water to air concentrations in parts per million.

| PPM | Mean micron distribution |
|---|---|
| 0.01 | 4 μm |
| 1 | 5 μm |
| 10 | 8 μm |
| 100 | 15 μm |
| 1000 | >15 μm |

[2]Water content in inlet air at which droplet breakthough occurs.

It is apparent that the addition of the third stage vortex air cleaner array very materially improves the removal of water droplets that break through the mist eliminator (demister) stage in the two stage system.

The separating efficiency of the three stage apparatus of the invention for both solid contaminants and water is excellent.

The mist eliminator can be composed of an array of any sheet made of metal or plastic filamentary or wire material. Knitted wire mesh is a preferred material but woven wire mesh and nonwoven wire mats can also be used.

A knitted mesh is composed of rows of loops, each caught into the previous row, and depending for its support on both the row above and the row below. There are two types of knitting, weft and warp. In weft-knit mesh the loops run crosswise in the fabric, and each loop is linked into the loop on the preceding row. In warp-knit mesh, parallel yarns are united in a chain stitch, first one yarn and then the other zig-zagging to tie the yarns together; and the loops interlock both weftwise and warpwise in the fabric. Warp-knitted mesh has about four times as many stitches to the inch as weft-knit mesh, and is of a stronger and closer construction.

Knitted wire mesh stacks can be made up of warp-knitted or weft-knitted wire mesh in any combination of mesh, wires, pore sizes, and knit types and stitches, such as plain stitch or purl stitch, flat stitch or rib stitch, open work stitch or tuck stick, weft-knit mesh; and single-bar tricot, double-bar tricot and Milanese warp-knit mesh. Flat knit and circular knit mesh can be used. Circular knit mesh can be cut open, or used double.

Woven wire mesh can be woven in any available open weave, such as plain weave, square weave, twill weave, and Dutch twill weave.

Nonwoven wire mats are made of intertwined and intermingled continuous or long filament material.

It is important that the filamentary sheet be nonbonded, i.e., the filaments should not be bonded together at their points of crossing.

When sheets of filamentary material are superimposed at random in an array of layers, the pores of the adjacent layers do not necessarily line up, because the sheets have an uneven surface, with projecting portions resulting in relative displacement and spacing of adjacent layers. Upon compression of the composite in a direction perpendicular to the plane of the layers, this displacement may be increased. Thus, because of the random orientation of the layers of the stack, the through pores follow an extremely tortuous path.

This compression and relative displacement has the effect of reducing the size of the through pores in the stack. Filaments of adjacent layers may project into and partially obstruct the surface openings of pores of the next adjacent layers, and upon compression this effect can be repeated many times.

The sheets of filamentary material can be formed of filaments or wires of any metal. For most uses, metals which are inert to and non-corroded by the fluid being filtered or the gas in contact therewith are of course preferred. Stainless steel is a very suitable material. Aluminum, brass and bronze wires can also be used. Other metals that are useful include copper, iron, steel, molybdenum, tantalum, columbium, titanium, tungsten, nickel-chromium alloys, cobalt-based alloys, chromium-plated wires of all types, zinc-plated wires of all types, and cadmium-plated wires of all types. Corrosion resistant alloys such as Monel metal and plastic monofilaments can also be used, especially for salt water environments. Inert plastics, such as polypropylene, polyethylene, polyamides, polyesters and polyisobutylene, are preferred. Where corrosion resistance is not important, however, other plastics can be used, such as polyvinyl chloride, polyvinylidene chloride and polyacrylonitrile.

The wires or filaments are usually monofilaments. The wires or filaments can be of any cross-sectional configuration, such as round, square, flat, polygonal, elliptical and rectangular. Stranded multifilament wire can be used.

The stack is prepared by superimposing a selected number of sheets of filamentary material, one above the other. The orientation is random, preferably, since this best enables each sheet to remedy any nonuniformity in the next sheet, and produce a composite that is uniform throughout, but an orderly or a patterned orientation, such as laying alternate sheets at right angles, or other specific orientation, to the one below may have advantages in some instances.

It is important that the stack of knitted wire mesh layers have as much open area as possible, so as to avoid imposing restrictions on air flow. Consequently, it is preferred that the open volume be within the range from about 95 to about 99.9%, although under certain circumstances open areas ranging to as low as about 80% can be tolerated.

Liquids are removed by impingement on the wires or filaments of the array. Consequently, it is desirable to have as many wires or filaments as possible within the volume of the array, while at the same time retaining the desired open volume. This means that the finer wires or filaments having diameters ranging from about 118 to about 590 micrometers are preferred. The wires can in general range in diameter from about 12.7 to about 889 micrometers.

The layers in the array can be flat or corrugated. Combinations of flat and corrugated layers of the same or different sheet or mesh types are frequently quite advantageous. The random disposition of the openings in the sheets in a plurality of juxtaposed layers of different types tends to average out over the entire array, through the volume of the array, producing relatively uniform porosity throughout. The uniformity is increased if layers of different wire sizes and different proportions of openness are employed, in combination.

A particularly preferred combination of layers is composed of seventeen to thirty-four layers of knit mesh sheets of 152 micrometers wire corrugated with 2,5×2,5×0,16 cm wire mesh facing on upstream and downstream faces.

The more layers in a stack, the greater the pressure drop across the stack, but at the same time the ability to remove suspended contaminants increases, up to an optimum, after which the greater pressure drop across the stack is not compensated for by an increased removal efficiency. Accordingly, the thickness of the stack will in general be within the range from about 1.3 to about 25 cm, and preferably from about 3.8 to about 10.2 cm.

The flexibility of the stack, even at the maximum thickness indicated, is remarkable, and consequently the stack can be put in any desired shape, according to the space restrictions of the craft. It is usually preferable that the stack be flat, and the opposite faces parallel, but there is no reason why a stack cannot be used that is thicker on one side than on another, and that is curved in a convex or concave configuration, or with double convex or double concave faces, and any combination of dimpled, waffled or corrugated patterns. It can in fact be bent or curved to fit any desired contour of inlet passage, downstream of the vortex air cleaner array. Since however the vortex air cleaner array is not so flexible, and is normally arranged with the vortex air cleaners of the array in parallel, and as close together as possible, a closely juxtaposed mist eliminator will also have the same flat surface configuration at least at the side facing the outlet side of the vortex air cleaner array.

A gauge of the number of wires per unit volume of sheet is given by the density, which is also an indication of the size of openings in the wire sheet. The sheets in accordance with the invention can have a density within the range from about 4 to about 320 Kg/cu.m and preferably from about 80 to about 160 Kg/cu.m.

For improved wire distribution and low pressure drop, corrugated sheets are preferable. These should be crossed in the stack, so that the crimps are not nested, thereby spacing the layers from each other, and increasing the proportion of open area.

The mist eliminator is assembled by stacking the number of layers desired, with or without corrugating, and then enclosing the stack between facing grids, which are rigid, and retain the layers under compression, or binding the wire mesh layers together, such as for example, by wire stitching at spaced intervals throughout the surface area. The degree of compression will depend upon the openness and density desired, since of course compression reduces open area by pushing the layers closer together, and to some extent pressing out corrugations. However, compression increases rigidity, and also increases uniformity. In general, the stack should be retained under a compression within the range from about 6,9 to about 690 KPa, and preferably from about 10,4 to about 34,5 KPa.

The inlet air cleaner assembly of the invention can be used in series with the air intake in any kind of gas turbine engine for marine vehicles, such as turboprop and pure jet engines, in any kind of marine vehicle where water, dirt and other contaminant ingestion is a problem. Surface effect, hydrofoil, Hovercraft, fast military water craft and vessels, helicopters, aircraft-carrier-based military planes, and seaplane-type aircraft powered by turboprop and jet engines are benefitted by incorporation of such assemblies to clean air of liquid and solid contaminants entering the engine.

## Claims

1. A vortex air cleaner and mist eliminator assembly (2) for quantitatively removing airborne water and other air-borne liquid and solid contaminants ingested by a gas turbine engine (1) in marine use comprising, in combination, a housing (11) having an inlet (3) and an outlet arranged for flow therethrough of air carrying heavier and lighter contaminant particles and aerosol-borne particles; and disposed in the housing (11) across the line of air flow from the inlet (3) to the outlet, in sequence, a first array (10) removing heavier liquid and solid contaminant particles and comprising a plurality of vortex air cleaners (69), in which the vortex air cleaners (69) each comprises a straight tubular air cleaner body (23) having a cylindrical central passage (33) with an inlet (24) and an outlet (28) at opposite ends, and a deflector (29) adjacent the inlet (24) for creating a vortex stream in the influent air to concentrate contaminant particles in the air at the periphery of the passage (33) and provide a core of air at the center of the passage (33) containing lighter and aerosol-borne contaminant particles, and an outlet member (27) having a central core air passage (32) communicating with the cylindrical central passage (33) of the tubular body (23) and disposed within the passage (33) at the outlet (28), the exterior wall of the outlet member (27) defining a generally annular contaminant scavenge passage (30) within the cylindrical central passage (33) of the tubular body (23) through which pass contaminant particles, while core air at the center of the passage (33) passes through the central core air passage (35) of the outlet member (27); a second array (50) coalescing and removing lighter and aerosol-borne liquid and solid contaminant particles and comprising a plurality of superimposed sheets (51) of a filamentary material defining passages therethrough from face to face of the array (50), arranged in flow communication with the core air passages (35) of the outlet members (27) of the vortex air cleaners (69) in the first array (10), the sheets (51) comprising monofilaments having a diameter within the range from about 12.7 to about 889 micrometers, and being compressed substantially throughout this surface area to a maximum pore diameter, below about 5 mm under a pressure within the range from about 6.9 to about 690 KPa, such that the pressure drop across a 0.15 square meter portion of the array at a standard air flow of 83 $m^3$/min. at 25°C within the range from about 0.13 to about 0.75 KPa water column, the filaments at the interface of the interior layers in pressure contact with each other substantially throughout by such compression, characterized by a third array (60) being provided for removing additional liquid and solid contaminant particles including coalesced liquid droplets and comprising a plurality of vortex air cleaners (69) arranged at the same or at a higher density of inlet open surface area than the first array (10), in which the vortex air cleaners (69) comprise a straight tubular air cleaner body having a cylindrical central passage (33) with an inlet and an outlet at opposite ends, and a deflector adjacent the inlet for creating a vortex stream in the influent air to concentrate contaminant particles in the air at the periphery of the passage, and provide a core of air at the center of the passage, and an outlet member having a central core air passage (32) communicating with the cylindrical central passage (33) of the tubular body and disposed within the passage at the outlet, the exterior wall of the outlet member defining a generally annular contaminant scavenge passage within the cylindrical central passage (30) of the tubular body through which pass contaminant particles, while core air at the center of the passage (33) passes through the central core air passage (32) of the outlet member such that the inlet gas to the cleaner arrays (10, 50, 60) passes along a substantial straight path towards the engine thereby keeping any pressure drop in the inlet air at a minimum.

2. A vortex air cleaner and mist eliminator assembly in accordance with Claim 1, in which each vortex air cleaner array (10, 60) comprises a plurality of air cleaners (23) arranged in parallel rows, with the individual cleaners (23) of each row being slightly and uniformly offset from the cleaners (23) of the next row, with the rows placed closer together than the diameter of the individual vortex air cleaners (23) of the rows.

3. A vortex air cleaner and mist eliminator assembly in accordance with Claim 1, in which each vortex air cleaner array (10, 60) comprises a plurality of vortex air cleaners (69) mounted together as a unit with their axes aligned in parallel.

4. A vortex air cleaner and mist eliminator assembly in accordance with Claim 3, in which the vortex air cleaners (69) of both arrays (10, 60) are held between support plates (24, 25) at their inlets (24) and outlets (28), and have scavenge passages which empty into scavenge chamber (31) between the support plates (24, 25); and a scavenge port in a wall of the scavenge chamber (31) for the removal of contaminant particles therefrom; and the vortex air cleaners (69) have core air outlets opening into the space beyond the support plates (24, 25).

5. A vortex air cleaner and mist eliminator assembly in accordance with Claim 1, in which the plurality of superimposed sheets of filamentary material comprises a stack comprising corrugated sheets interleaved crosswise so that corrugations do not nest.

6. A vortex air cleaner and mist eliminator assembly in accordance with Claim 1, in which the plurality of superimposed sheets of filamentary material comprises a stack comprising corrugated sheets and noncorrugated sheets.

7. A gas turbine engine (1) for marine vehicles comprising a housing; a gas turbine (6) in the housing; an air intake (3) in the housing for air fed to the gas turbine (6); and a vortex air cleaner and mist eliminator assembly (2) in accordance with Claim 1, in series gas flow connection between the air intake (3) and the gas turbine (6).

8. A gas turbine engine (1) for marine vehicles according to Claim 7, comprising a compressor (4); an air ejector (36) in each vortex air cleaner array (10, 60); and a bleed air line (9) connecting the compressor (4) to the ejector (36) of each vortex air cleaner array (10, 60) for scavenge flow of compressed air through ejector (36).

9. A gas turbine engine (1) for marine vehicles according to Claim 7, comprising a compressor (4), an air ejector (36) in the mist eliminator (50), and a bleed air line (9) connecting the compressor (4) to the ejector (36) of the mist eliminator (50) for scavenge flow of compressed air through the ejector.

**Patentansprüche**

1. Reinigungsanlage mit einer Wirbelstrom-Luftreinigungsvorrichtung und mit einer Abscheidevorrichtung für Nebel zum quantitativen Abscheiden von in der Luft schwebenden flüssigen und festen Verunreinigungen, in der Einlaßluft einer Gasturbine zur Verwendung bei der Schiffahrt mit einem Gehäuse (11) mit einem Einlaß (3) und einem Auslaß, durch die Luft hindurchströmen kann, die schwerere und leichtere Verunreinigungsteilen sowie in einem Aerosol schwebende Teilchen trägt, wobei im Gehäuse (11) quer zur Luftströmung von Einlaß (3) zum Auslaß hintereinander angeordnet sind: eine erste Reihe (10) zur Entfernung schwererer flüssiger und fester Verunreinigungsteilchen mit mehreren Wirbelluftreinigern (69), von denen jeder einen geraden, rohrförmigen Reinigerkörper (23) mit einer zylindrischen Mitteleitung (33) und mit einem Einlaß (24) und einem Auslaß (28) an einander entgegengesetzten Enden aufweist, sowie eine Ablenkeinrichtung (29) neben dem Einlaß (24) zur Ausbildung eines Wirbelstroms in der zuströmenden Luft zwecks Konzentration der Verunreinigungsteilchen in der Luft am Umfang der Leitung (33) und Ausbildung eines Luftkerns in der Mitte der Leitung (33), der leichtere sowie die im Aerosol schwebende Verunreinigungsteilchen enthält, und mit einem Auslaßglied (27) mit einer mittleren Leitung (32) für die Kernluft, die mit der Mittelleitung (33) des Reinigungskörpers (23) in Verbindung steht und das sich in der Leitung (33) am Auslaß (28) befindet, wobei die Außenwand des Auslaßgliedes (27) eine im wesentlichen ringförmige Spülleitung (30) für Verunreinigungen innerhalb der Mitteleitung (33) des Reinigungskörpers (23) ausbildet, durch die Verunreinigungsteilchen, gehen während Kernluft in der Mitte der Leitung (33) durch die mittlere Leitung (35) des Auslaßgliedes (27) für die Kernluft strömt, ferner eine zweite Reihe (50) zur Vereinigung und zum Entfernen leichterer und als Aerosol schwebender, flüssiger und fester Verunreinigungsteilchen, die eine Vielzahl von übereinander angeordneten Schichten (51) aus Filamentmaterial aufweist, die von Stirnfläche zu Stirnfläche der Reihe (50) Leitungen durch das Material ausbilden, die in Strömungsverbindung mit den Leitungen (35) für die Kernluft der Auslaßglieder (27) der Wirbelluftreiniger (69) der ersten Reihe (10) stehen, wobei die Schichten (51) Monofilamente mit einem Durchmesser zwischen etwa 12,7 und etwa 889 $\mu$m haben und im wesentlichen über ihre Oberfläche auf einen maximalen Porendurchmesser unter etwa 5 mm komprimiert sind, und zwar unter einem Druck im Bereich von etwa 6,9 bis etwa 690 KPa, so daß der Druckabfall über eine Fläche von 0,15 m² der Reihe bei einer Standard-Luftströmung von 83 m³/min bei 25°C sich im Bereich von etwa 0,13 bis etwa 0,75 KPa Wassersäule befindet, wobei die Filamente an der Zwischenfläche der Innenschichten im wesentlichen durch diese Kompression miteinander in Druckkontakt stehen, dadurch gekennzeichnet, daß eine dritte Reihe (60) zum Entfernen zusätzlicher flüssiger und fester Verunreinigungsteilchen einschließlich vereinigter Flüssigkeitströpfchen vorgesehen ist, die eine Vielzahl von Wirbelluftreinigern (69) aufweist, die, verglichen mit der ersten Reihe (10), in derselben oder in einer höheren Dichte der lichten Einlaßfläche angeordnet sind, wobei jeder der Wirbelluftreiniger einen geraden, rohrförmigen Reinigungskörper (23) mit einer zylindrischen Mitteleitung (33) und mit einem Einlaß (24) und einem Auslaß (28) an einander engegengesetzten Enden aufweist soei einer Ablenkeinrichtung (29) neben dem Einlaß (24) zur Ausbildung eines Wirbelstroms in der zuströmenden Luft zwecks Konzentration der Verunreinigungsteilchen in der Luft am Umfang der Leitung (33) und Ausbildung eines Luftkerns in der Mitte der Leitung (33), und mit einem Auslaßglied (28) mit einer mittleren Leitung (32) für die Kernluft, die mit der Mittelleitung (33) des Reinigungskörpers (23) in Verbindung steht und das sich in der Leitung (33) am Auslaß (28) befindet, wobei die Außenwand des Auslaßgliedes (27) eine im wesentlichen ringförmige Spülleitung (30) für Verunreinigungen innerhalb der Mittelleitung (33) des Reinigungskörpers (23) ausbildet, durch die Verunreinigungsteilchen gehen, während Kernluft in der Mitte der Leitung (33) durch die mittlere Leitung (35) des Auslaßgliedes (27) für die Kernluft strömt, so daß das den Reihen (10, 50, 60) der Reinigungsvorrichtungen zuströmende Gas einen im wesentlichen geraden Strömungsweg zur Turbine zurücklegt und dabei den Druckverlust für die Einlaßluft so gering wie mögliche hält.

2. Reinigungsanlage nach Anspruch 1, dadurch gekennzeichnet, daß jede Reihe (10, 60) der Wirbelluftreiniger eine Vielzahl von in parallelen Reihen angeordneten Luftreinigen (23) aufweist, wobei die einzelnen Luftreiniger (23) jeder Reihe gegenüber denjenigen der nächsten Reihe geringfügig und gleichförmig versetzt sind, so daß die Reihen einen gerringeren Abstand voneinander einnehmen als der Durchmesser der einzelnen Luftreiniger (23) der Reihen beträgt.

3. Reinigungsanlage nach Anspruch 1, dadurch gekennzeichnet, daß jede Reihe (10, 60) der Wirbelluftreiniger eine Vielzahl von Luftreinigern (69) aufweist, die mit parallel ausgerichteten Achsen als Beaueinheit ausgebildet sind.

4. Reinigungsanlage nach Anspruch 3, dadurch gekennzeichnet, daß die Luftreiniger (69) beider Reihen (10, 60) an ihren Einlässen (24) und Auslässen (28) zwischen Stützplatten (24, 25) gehalten sind, daß die Spülleitungen in eine Spülkammer (31) zwischen den Stützplatten (24, 25) münden, daß eine Spülöffnung in einer Wand der Spülkammer (31) vorgesehen ist zwecks Abzug der Verunreinigungsteilchen und daß die Luftreiniger (69) Kernluftauslässe haben, die in den Raum hinter die Stützplatten (24, 25) münden.

5. Reinigungsanlage nach Anspruch 1, dadurch gekennzeichnet, daß die Vielzahl der übereinander angeordneten Schichten aus Filamentmaterial einen Stapel mit gewellten Schichten aufweist, die kreuzweise verwoben sind, so daß die Wellungen sich nicht verzahnen.

6. Reinigungsanlage nach Anspruch 1, dadurch gekennzeichnet, daß die Vielzahl der übereinander angeordneten Schichten aus Filamentmaterial einen Stapel mit gewellten und nicht gewellten Schichten aufweist.

7. Gasturbinenanordnung (1) für Wasserfahrzeuge, gekennzeichnet, durch ein Gehäuse, eine Gasturbine (6) im Gehäuse, einen Lufteinlaß (3) im Gehäuse für die Luftzufuhr zur Gasturbine (6) und durch eine Reinigungsanlage nach Patentanspruch 1, die in einer Serien-Gasströmungsverbindung zwischen dem Lufteinlaß (3) und der Gasturbine (6) angeordnet ist.

8. Gasturbinenanordnung nach Anspruch 7, dadurch gekennzeichnet, daß ein Kompressor (4) ein Luftejektor (36) in jeder (50) Reihe (10, 60) der Wirbelluftreiniger und eine Luft-Anzapfleitung (9) vorgesehen ist, die den Kompressor (4) mit dem Ejektor (36) jeder Reihe (10, 60) der Wirbelluftreiniger zur Ausbildung einer Spülströmung aus Druckluft durch den Ejektor verbindet.

9. Gasturbinenanordnung nach Anspruch 7, dadurch gekennzeichnet, daß eine Kompressor (4) vorgesehen ist, ein Luftejektor (36) im Nebelabscheider (50) und eine Luft-Anzapfleitung (9), die den Kompressor (4) mit dem Ejektor (36) des Nebelabscheiders (50) zur Ausbildung einer Spülströmung aus Druckluft durch den Ejektor verbindet.

**Revendications**

1. Un ensemble épurateur d'air à tourbillon et éliminateur de brouillard (2) pour éliminer quantitativement l'eau transportée par l'air et d'autres contaminants liquides et solides transportés par l'air ingérés par un moteur à turbine à gaz (1) en utilisation marine, comprenant, en combinaison, un carter (11) ayant une entrée (3) et une sortie arrangées pour laisser s'écouler à travers elles de l'air transportant des particules contaminantes relativement lourdes et relativement légères et des particules transportées en aérosol; et, disposées successivement dans le carter, en travers de l'axe du flux d'air allant de l'entrée (3) vers la sortie, un premier dispositif (10) éliminant les particules contaminantes liquides et solides relativement lourdes et comprenant une pluralité d'épurateurs d'air à tourbillon (69), dans lequel les épurateurs d'air à tourbillon (69) comprennent chacun un corps d'épurateur d'air tubulaire rectiligne (23) ayant un passage central cylindrique (33), avec une entrée (24) et une sortie (28) aux extrémités opposées, et un déflecteur (29) adjacent à l'entrée (24) et servant à créer un courant tourbillonnaire dans l'air affluent pour concentrer les particules contaminantes dans l'air à la périphérie du passage (33) et former un noyau d'air au centre du passage (33), qui contient des particules contaminantes relativement légères et transportées en aérosol, et un élément de sortie (27) ayant un passage central d'air de noyau (32) qui communique avec le passage central cylindrique (33) du corps tubulaire (23) et est disposé dans le passage (33) à la sortie (28), la paroi extérieure de l'élément de sortie (27) définissant un passage d'éjection des contaminants (30) de forme générale annulaire à l'intérieur du passage central cylindrique (33) du corps tubulaire (23), par lequel passent les particules contaminantes, cependant que l'air de noyau au centre du passage (33) passe par le passage central d'air de noyau (35) de l'élément de sortie (27); un deuxième dispositif (50) agglomérant et éliminant les particules contaminantes liquides et solides relativement légères et transportées en aérosol et comprenant une pluralité de feuilles superposées (51) d'un matière filamentaire définissant des passages à travers elles d'une face à l'autre du dispositif (50), arrangés en communication pour l'écoulement avec les passages d'air de noyau (35) des éléments de sortie (27) des épurateurs d'air à tourbillon (69) du premier dispositif (10), les feuilles (51) comprenant des monofilaments ayant un diamètre compris dans l'intervalle d'environ 12,7 à environ 889 micromètres et étant comprimées sensiblement su toute cette surface à un diamètre de pores maximum au-dessous d'environ 5 mm sous une pression comprise dans l'intervalle d'environ 6,0 à environ 690 kPa, de manière que la chute de pression à travers une portion de 0,15 mètre carré du dispositif à un débit d'air normal de 83 m³/mn à 25°C soit comprise dans l'intervalle d'environ 0,13 à environ 0,75 kPa de colonne d'eau, les filaments à l'interface des couches intérieures étant en contact entre eux sensiblement dans tout le volume sous l'effet de cette compression, caractérisé par un troisième dispositif (60) prévu pour éliminer encore d'autres particules contaminantes liquides et solides comprenant des gouttelettes de liquides agglomérées, et constitué par une pluralité d'éparateurs d'air à tourbillon (69) arrangés à la même densité d'aire de surface ouverte d'entrée que le premier dispositif (10) ou à une densité plus élevée, dans lequel les épurateurs à tourbillon (69) comprennent un corps d'éparateur d'air tubulaire rectiligne ayant une entrée et une sortie aux extrémités opposées, et un déflecteur adjacent à l'entrée, servant à créer un courant tourbillonnaire dans l'air affluent pour concentrer les particules contaminantes dans l'air situé à la périphérie du passage, et former un noyau d'air au centre du passage, et un élément de sortie ayant un passage central de noyau d'air (32) communiquant avec le passage central cylindrique (33) du corps tubulaire et disposé dans la passage à la sortie, la paroi extérieure de l'élément de sortie définissant un passage d'éjection des contaminants généralement annulaire à l'intérieur du passage central cylindrique (30) du corps tubulaire, par lequel passent les particules contaminantes, cependant que l'air du noyau au centre du passage (33) passe par le passage central d'air de noyau (32) de l'élément de sortie de sorte que le gaz d'entrée parvenant aux dispositifs épurateurs (10, 50, 60) passe le long d'un trajet sensiblement rectiligne en se dirigeant vers le moteur, en maintenant de cette façon à un minimum la perte de pression dans l'air d'entrée.

2. Un ensemble épurateur d'air à tourbillon et éliminateur de brouillard selon la revendication 1, dans lequel chaque dispositif d'épurateurs d'air à tourbillon (10, 60) comprend une pluralité d'épurateurs d'air (23) arrangés en rangées parallèles, les épurateurs individuels (23) de chaque rangée étant décalés légèrement et uniformément par rapport aux épurateurs (23) de la rangée suivante, les rangées étant resserrées de plus près qu'un diamètre des épurateurs d'air à tourbillon individuels (23) des rangées.

3. Un ensemble épurateur d'air à tourbillon et éliminateur de brouillard selon la revendication 1, caractérisé en ce que chaque dispositif d'épurateurs d'air à tourbillon (10, 60) comprend une pluralité d'épurateurs d'air à tourbillon (69) montés ensemble en une unité avec leurs axes alignés en parallèle.

4. Un ensemble épurateur d'air à tourbillon et éliminateur de brouillard selon la revendication 3, dans lequel les épurateurs d'air à tourbillon (69) des deux dispositifs (10, 60) sont tenus entre des plaques support (24, 25) à leurs entrées (24) et sortie (28) et ont des passages d'éjection qui se vident dans une chambre d'éjection (31) située entre les plaques supports (24, 25); et un orifice d'éjection prévu dans la paroi de la chambre d'éjection (31) pour l'élimination des particules contaminantes de cette chambre; et les épurateurs d'air à tourbillon (69) ont des ouvertures d'air de noyau qui s'ouvrent dans l'espace situé au-delà des plaques supports (24, 25).

5. Un ensemble épurateur d'air à tourbillon et éliminateur de brouillard selon la revendication 1, dans lequel la pluralité de feuilles superposées de matière filamentaire forment un empilement comprenant des feuilles ondulées en disposition croisée de sorte que les ondulations ne s'imbriquent pas les unes dans les autres.

6. Un ensemble épurateur d'air à tourbillon et éliminateur de brouillard selon la revendication 1, dans lequel la pluralité de feuilles superposées de matière filamentaire forment un empilement comprenant des feuilles ondulées et des feuilles non ondulées.

7. Un moteur à turbine à gaz (1) pour véhicules marins comprenant un carter; une turbine à gaz (6) dans le carter; une prise d'air (3) dans le carter pour l'air acheminé à la turbine à gaz (6); et un ensemble épurateurs d'air à tourbillon et éliminateur de brouillard (2) selon la revendication 1, connectés pour l'écoulement des gaz en série entre la prise d'air (3) et la turbine à gaz (6).

8. Un moteur à turbine à gaz (1) pour véhicules marins selon la revendication 7, comprenant un compresseur (4); un éjecteur d'air (36) dans chaque dispositif d'épurateurs d'air à tourbillon (10, 60); et un conduit d'air de piquage (9) reliant le compresseur (4) à l'éjecteur (36) de chaque dispositif d'épurateurs d'air à tourbillon (10, 60) pour éjecter le flux d'air comprimé à travers l'éjecteur (36).

9. Un moteur à turbine à gaz (1) pour véhicules marins selon la revendication 7, comprenant un compresseur (4), un éjecteur d'air (36) prévu dans l'éliminateur de brouillard (50) et un conduit d'air de piquage (9) reliant le compresseur (4) à l'éjecteur (36) de l'éliminateur de brouillard (50) pour éjecter le flux d'air comprimé à travers l'éjecteur.

FIG. 1

FIG. 2

FIG.3

FIG. 4

FIG.5

FIG.6